# EUROPEAN PATENT APPLICATION

(11) **EP 1 734 776 A1**
(43) Date of publication of application: **20.12.2006**
(21) Application number: 05013050.9
(22) Date of filing: 16.06.2005
(51) Int. Cl.: H04Q 7/38

(54) **Method for SACCH signaling**

(71) Applicant: SIEMENS AKTIENGESELLSCHAFT, 80333 München (DE)
(72) Inventor: Hofmann, Jürgen, 86504 Merching (DE); Monschau, Jörg, 81377 München (DE)

(57) **Abstract**

The invention relates to a method for SACCH-signalling between a base station and a mobile station of a radio communication system.

The radio conditions of a SACCH-signalling channel in uplink and in downlink direction are determined. In dependency of the determined uplink conditions either complete SACCH-information or reduced SACCH-information with robust encoding are transmitted in uplink direction.
Also in dependency of the determined downlink conditions SACCH-information are transmitted either once or twice in downlink direction, while twice transmitted SACCH information are used for a consecutively soft-combining method or a repeated block decoding method after receiving.

In a first multiframe the base station signals to the mobile station the kind of SACCH transmission, which has to be used by the mobile station in uplink direction and for the signaling stealing bits of corresponding SACCH bursts, which belong to a assigned SACCH information block, are used.

In a following second multiframe the base station signals to the mobile station the kind of SACCH transmission, which is used by the base station in downlink direction and for the signaling stealing bits of corresponding SACCH bursts, which belong to a assigned SACCH information block, are used.

## Description

The invention relates to a method for SACCH-signalling between a base station and a mobile station of a radio communication system.

Currently so called "Adaptive Multi Rate Codecs, AMR-codecs" are specified in GSM/GERAN communication systems and in UMTS communication systems. This codecs have a superior performance over the existing speech codecs like the so called "Full Rate Speech, FR" codecs being defined in standard GSM Phase 1 and have also superior performance over the so called "Enhanced Full Rate Speech, EFR" codecs being defined in GSM Phase 2.

The AMR codecs provide series of modes, each providing better speech quality at higher bit rates and even good speech comprehensibility at lower bit rates. Higher bit rate modes are typically used for radio channels, which have good radio channel conditions while lower bit rate modes are typically used for channels, which have worse radio channel conditions.

It has been shown for GSM/EDGE communication networks that the performance of an AMR full rate speech channel with low bit rate is superior to associated signaling channels - namely the so called "Fast Associated Control Channel, FACCH" or the so called "Slow Associated Control Channel, SACCH".

Because of this fact the quality of an associated signaling channel is going to degrade before the quality of a voice traffic channel is affected. Thus a communication to a user, who receives still with a good speech quality, will be dropped by the GSM network, because of too many lost signaling messages.

Therefore SACCH-transmissions which occur over the SACCH channel have to be made more robust, to transmit link quality information and neighbor cell measurements in uplink direction from a mobile station to a base station and to transmit radio link control commands and neighbor cell information in downlink direction from the base station to the mobile station.

This is also necessary in the presence of robust coded "Full Rate, FR" AMR channels with codec rates typically lower than 6.7 kbit/s. A radio link failure algorithm, which terminates the call due to bad link quality, is executed at the receiver of each link, i.e. at the base station BS and at the mobile station MS each. This algorithm is based on a SACCH frame error rate and is specified in standard GSM 05.08/3GPP 45.008.

The problem to be solved by this invention is to improve the SACCH transmission between a base station and a mobile station to ensure a reliable communication even in the presence of worse radio conditions and especially in the presence of full rate AMR speech channels.

The problem is solved by the method which is presented in claim 1. Advancements of the invention are described in claims 2 to 12.

The inventive method improves the transmission of the SACCH-signaling. Therefore the power control mechanism, the timing advance mechanism, the short message transfer, the measurement ordering and the measurement result transfer exchange, which all use the SACCH channel for signaling, are also improved.

In presence of bad radio conditions of the radio channel in uplink direction the inventive method uses normal SACCH-signaling but with reduced SACCH-information. This situation is referred as "short SACCH" consecutively. The reduced information for uplink is encoded with a more robust encoding method. So the uplink direction of the SACCH transmission is improved. This is referred as "enhanced uplink SACCH transmission mode" in the succeeding description.

In the presence of bad radio conditions of the radio channel in downlink direction the normal SACCH-information or messages are transmitted twice successively.

In case that the first transmission could not be decoded by the mobile station, the mobile station awaits the second transmission and combines both transmissions with a soft combining method bit by bit upon complete reception.

Alternative the mobile station performs a decoding of the second transmission carrying the same SACCH information block. This is referred as "repeated SACCH block decoding" in the succeeding description.

So the downlink direction of the SACCH transmission is improved. This is referred as "enhanced downlink SACCH transmission mode" in the succeeding description.

It is possible to improve uplink and downlink together or separately, depending on the radio conditions in uplink direction or in downlink direction.

Therefore it has to be signaled from a transmitter to a receiver if a so called "normal" SACCH or if the enhanced SACCH is being used.

The term "normal" SACCH refers to the standardized SACCH transmission according to standard GSM TS 45.003, where the SACCH information are sent completely.

For this signaling so called "stealing bits", which are defined as part of SACCH bursts, are used. This is shown in the succeeding description.

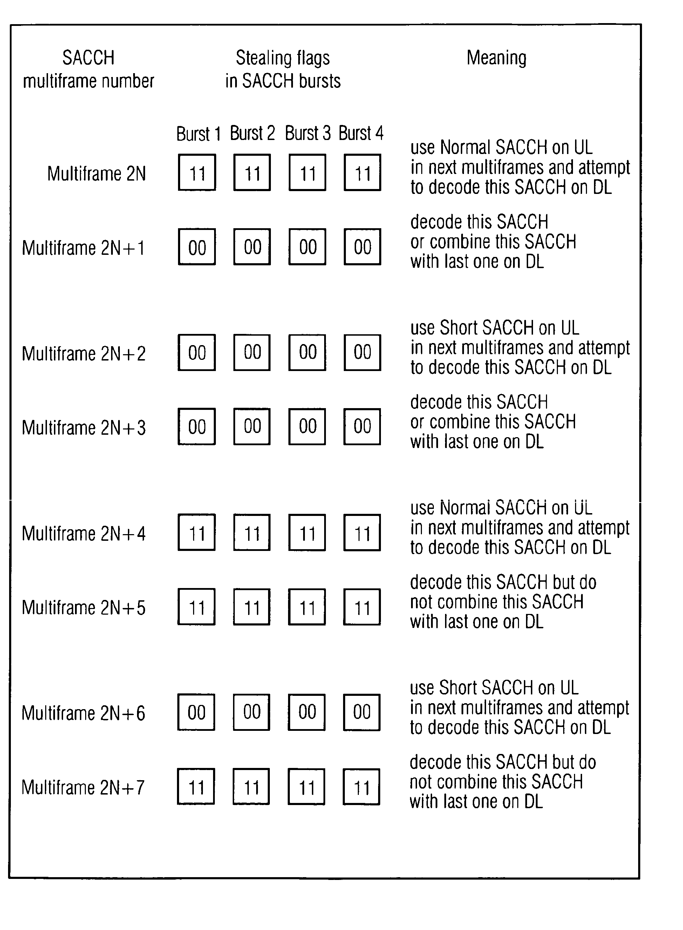

The signaling, which occurs in downlink direction, of the SACCH transmission mode for downlink and uplink is shown exemplarily in FIG 1.

A SACCH multiframe refers to the measurement period of 104 TDMA frames for radio link control purposes.

A downlink SACCH-message in the enhanced SACCH transmission mode is sent in two successive SACCH multiframes and can be decoded either after the first transmission in the first SACCH multiframe or after the reception of the second transmission in the second following SACCH multiframe.

If the mobile station succeeds in decoding the first SACCH transmission it can earlier apply the power control and timing advance commands to the uplink transmission.

The enhanced SACCH transmission on downlink in two successive SACCH multiframes enables to define the stealing bits of the SACCH differently for two successive transmissions of the same SACCH information block.

The stealing flags or stealing bits for a first SACCH transmission indicate the uplink SACCH transmission mode as decided by the base station BS and commanded to be used by the mobile station MS for the next SACCH multiframes.

The stealing flags for a second SACCH transmission indicate the downlink SACCH transmission mode applied by the base station BS.

Thus the setting of the downlink stealing flags also enable the control of the uplink transmission mode used by the mobile station MS. Both SACCH multiframes where the first and the second SACCH transmission occur, are refered as "paired SACCH multiframe" in the succeeding document.

Moreover this alternating definition of the stealing flags is also used if the normal SACCH is being signaled on downlink, no repetition of SACCH information blocks takes place and the mobile station MS may not perform softcombining or repeated SACCH block decoding. This is shown in Fig. 1 and outlined in the following.

As a first example a downlink SACCH sent in SACCH multiframe with number "2N", carries as stealing bits a bit sequence "11 11 11 11", separated in four assigned bursts "Burst 1", "Burst 2", Burst "3" and "Burst 4". So the mobile station MS is commanded to transmit a normal SACCH in uplink direction UL in the successive SACCH multiframes.

A downlink SACCH sent in the following SACCH multiframe with number "2N+1", carries as stealing bits bit sequence "00 00 00 00", so a mobile station MS is informed that an enhanced SACCH is transmitted in downlink direction DL and that it may either attempt for soft combining of both SACCH transmissions or performing repeated SACCH block decoding in case the decoding of the first SACCH transmission failed.

As a second example a downlink SACCH sent in SACCH multiframe with number "2N+2", carries as stealing bits a bit sequence "00 00 00 00". So the mobile station MS is commanded to transmit a short SACCH, i.e. the enhanced SACCH, in uplink direction UL in the successive SACCH multiframes.

A downlink SACCH sent in the following SACCH multiframe with number "2N+3" carries as stealing bits bit sequence "00 00 00 00", so a mobile station MS is informed that an enhanced SACCH is transmitted in downlink direction DL and that it may either attempt for soft combining of both SACCH transmissions or performing repeated SACCH block decoding in case the decoding of the first SACCH transmission failed.

As a third example a downlink SACCH sent in SACCH-multiframe with number "2N+4" carries as stealing bits a bit sequence "11 11 11 11". So the mobile station MS is commanded to transmit a normal SACCH in uplink direction UL in the successive SACCH multiframes.

A downlink SACCH sent in the following SACCH multiframe with number "2N+5", carries as stealing bits bit sequence "11 11 11 11", so a mobile station MS is informed that a normal SACCH is transmitted in downlink direction DL in this multiframe and that the mobile station may not perform soft combining with the SACCH in the preceeding SACCH multiframe or repeated SACCH block decoding.

As a fourth example a downlink SACCH sent in SACCH multiframe with number "2N+6" carries as stealing bits a bit sequence "00 00 00 00". So the mobile station MS is commanded to transmit a short SACCH, i.e. the enhanced SACCH, in uplink direction UL in the successive SACCH multiframes.

A downlink SACCH sent in the following SACCH multiframe with number "2N+7", carries as stealing bits bit sequence "11 11 11 11", so a mobile station MS is informed that a normal SACCH is transmitted in downlink direction DL in this multiframe and that the mobile station may not perform soft combining with the SACCH in the preceeding SACCH multiframe or repeated SACCH block decoding.

Because of the shown combination of "stealing bits" it is possible for the base station BS, to
a) control the decoding process in the mobile station MS, which must be enabled for different downlink SACCH transmission modes, and to
b) control the uplink SACCH transmission mode being used by the mobile station MS.

The stealing bits or stealing flags to control above mentioned operations a) and b) are sent inband on each downlink SACCH block.

Thus for a paired SACCH multiframe, in the first SACCH multiframe the setting of the downlink stealing bits of the SACCH indicate the transmission mode of the uplink SACCH to be used by the mobile station in the succeeding SACCH multiframes. In the second SACCH multiframe the setting of downlink stealing bits of the SACCH indicate the transmission mode of the downlink SACCH, in particular, whether the MS is allowed either to combine this SACCH transmission with the preceeding one or to use repeated SACCH block decoding.

In uplink the short SACCH may carry a different setting of the stealing flags "00 00 00 00" compared to the standardized normal SACCH "11 11 11 11" to allow easier detection at the base station.

After setup of the connection in a particular cell or after handover the base station BS may use the above described method to detect whether the mobile station MS is able to send the short SACCH on the uplink. A conventional or legacy mobile station MS will not send a short SACCH on the uplink, thus the base station BS will neither employ nor signal the enhanced SACCH transmission mode for either downlink DL or uplink UL and thus sends the normal SACCH in every SACCH multiframe.

The selection if normal SACCH or enhanced SACCH should be used is based on channel condition measurements.

## Claims

1. Method for SACCH-signalling between a base station and a mobile station of a radio communication system,
- whereas radio conditions of a SACCH-signalling channel in uplink and in downlink direction are determined,
- whereas in dependency of the determined uplink conditions either complete SACCH-information or reduced SACCH-information with robust encoding are transmitted in uplink direction,
- whereas in dependency of the determined downlink conditions SACCH-information are transmitted either once or twice in downlink direction, while twice transmitted SACCH information are used for a consecutively soft-combining method or for repeated SACCH block decoding after receiving,
- whereas in a first multiframe the base station signals to the mobile station the kind of SACCH transmission, which has to be used by the mobile station in uplink direction and for the signaling stealing bits of corresponding SACCH bursts, which belong to a assigned SACCH information block, are used, and
- whereas in a following second multiframe the base station signals to the mobile station the kind of SACCH transmission, which is used by the base station in downlink direction and for the signaling stealing bits of corresponding SACCH bursts, which belong to a assigned SACCH information block, are used.

2. Method in accordance with claim 1,
- whereas a even numbered SACCH multiframe and thereupon every next but one SACCH multiframe is used as first multiframe and
- whereas a odd numbered SACCH multiframe and thereupon every next but one is used as second multiframe.

3. Method in accordance with claim 1,
- whereas a even numbered SACCH multiframe and thereupon every next but one SACCH multiframe is used as second multiframe to indicate the SACCH transmission mode for the downlink to the mobile station and
- whereas a odd numbered SACCH multiframe and thereupon every next but one is used as first multiframe to command the SACCH transmission mode for the uplink to the mobile station.

4. Method in accordance with claim 1, whereas the mobile station uses different settings of the stealing flags in uplink direction for a short SACCH with reduced SACCH-information and for a normal SACCH with complete SACCH-information.

5. Method in accordance with claim 1,
- whereas the base station commands the mobile station, to send reduced SACCH information in uplink direction and
- whereas the base station detects from successive transmitted SACCH multiframes, if the mobile station follows this command.

6. Method in accordance with claim 1 or 3, whereas the mobile station performs decoding of each SACCH information block, and if a second downlink transmission of this SACCH information block is indicated in the stealing flags, it performs soft combining or repeated SACCH block decoding after complete reception of the first and second downlink transmission of this SACCH information block.

7. Method in accordance with claim 1 or 3, whereas four consecutive SACCH bursts are used to transmit the stealing bits.

8. Method in accordance with claim 3 or 5, whereas a stealing bit combination of "00" carried by each burst of a SACCH information block in downlink direction signals that two identical SACCH information for the soft-combining method or for repeated SACCH block decoding are transmitted in downlink direction.

9. Method in accordance with claim 3 or 5, whereas a stealing bit combination of "11" carried by each burst of a SACCH information block in downlink direction signals that complete SACCH information are transmitted in downlink direction.

10. Method in accordance with claim 3 or 5, whereas a stealing bit combination of "00" carried by each burst of a SACCH information block in downlink direction commands the mobile station to transmit reduced SACCH information with robust encoding in uplink direction.

11. Method in accordance with claim 3 or 5, whereas a stealing bit combination of "11" carried by each burst of a SACCH information block in downlink direction commands the mobile station to transmit complete SACCH information in uplink direction.

12. Method in accordance with one of claims 1 to 9 being used in the presence of robust coded AMR full rate modes with a codec rate lower or equal to 6.7kbit/s.
